# DEMANDE DE BREVET EUROPEEN

(11) **EP 0 776 870 A1**
(43) Date de publication de la demande: **04.06.1997**
(21) Numéro de dépôt: 96430015.6
(22) Date de dépôt: 29.10.1996
(51) Int. Cl.: C04B 28/02

(54) **Procédé pour la fabrication notamment in situ de mortier et micro béton autonivelant**

(30) Priorité: 29.11.1995 FR 9515104
(71) Demandeur: Viazzi, Pierre, 83200 Toulon (FR)
(72) Inventeur: Viazzi, Pierre, 83200 Toulon (FR)

(57) **Abrégé**

L'invention concerne un procédé pour la fabrication in situ de mortier et micro béton pour la fabrication de chapes autonivelantes à base de liant hydraulique.

On malaxe en présence d'eau, du ciment et d'autres ingrédients de base avec l'additif qui permet d'obtenir un matériau qui se coule comme un fluide liquide.

L'additif spécifique comprend de l'alcool à 90, un hyposulfite de sodium, et de l'iode.

L'invention intéresse les industries de construction du bâtiment et ouvrages divers.

## Description

L'invention concerne un procédé pour la fabrication notamment in situ de mortier et micro béton auto-nivelant.

Elle concerne surtout la fabrication d'un additif spécifique qui mélangé au ciment et aux matières inertes entrant dans la composition de ces bétons, a la propriété de rendre à ce dernier une rhéologiz telle que l'on peut couler ces bétons à l'aide d'une pompe sans aucune ségrégation et d'obtenir une parfaite planéité
L'additif, objet de la présente invention permet entre autre d'obtenir des chapes d'épaisseur variable entre 2 et 15 cm d'épaisseur et de superficie importante sans retrait ni fissure, si l'on prend la précaution de conformer les mortiers et bétons avec une courbe granulaire adéquate. L'additif permet en tout autre chose de réguler les temps de prise et l'on pourra de ce fait réaliser des chapes de grandes superficies et les surfacer dans la même journée à l'aide de tout matériel connu.
L'additif permet de par sa composition inovante, d'éviter toute poussière superficielle aprés durcissement car lors de la prise du mortier ou béton, une pellicule étanche se dépose en surface permettant à l'eau entrant dans la composition des chapes de s'évaporer trés lentement, ce qui permet d'augmenter les résistances mécaniques et d'éviter toute fissure

Le procédé selon l'invention est caractérisé essentiellement en ce qu'avant d'être transformé en chape propre à être conformée à un élément d'utilisation, le ciment constitutif additionné de préférence de ces minéraux conventionnels est mélangé au moins avec une dose d'additif
Cet ensemble de corps est dispersé au moyen de matériel connu tel que bétonnière, camion toupie etc...

L'ensemble du procédé additif plus mortier ou micro béton offre la particularité d'être pratiqué dans des matériels courants selon des méthodes opératoires simples et plus particulièrement, il pourra être exécuté avec de bons résultats sur les chantiers même par malaxage dans un camion toupie

Par ailleurs, le procédé selon l'invention permet de disposer de mélanges variés de matières inertes tels que sable de 0 à 4 mm, gravillons de 4 à 10 mm suivant les épaisseurs de chapes à réaliser qui pourront varier de 2 cm à 15 cm, voire même plus si nécessaire

A titre de mode de réalisation, l'invention va être décrite plus en détail à l'aide des exemples ci-aprés qui ne seraient en aucun cas limités de si peu que ce soit la portée de ladite invention Cette description porte dans un premier temps sur la fabrication de l'additif ainsi que sa composition

### EXEMPLE 1

fabrication de l'additif :
- 10 parties d'alcool 90°
- 40 parties d'hyposulfite de sodiem
- 50 parties d'eau
- au moins une iode

Tous ces produits sont placés dans un récipient usuel pour être mélangés sous forte agitation environ 15 mn, on obtient ainsi l'additif qui mélangé au ciment et matières inertes, va donner naissance au mortier et micro béton autonivelant Le mélange s'effectue à raison de 4 litres d'additif pour 1 m3 de mortier.

### EXEMPLE 2

Fabrication d'un mètre cube de mortier en auto-bétonnière Dans un camion toupie on malaxe 1650 kg de sable de 0,075 à 4 mm Ce sable étant exempt de fillers
400 kg de ciment CPA
4 Litres d'additif

On obtient ainsi aprés agitation un mortier autonivelant ayant une trés bonne rhéologie et qui permet un étalement facile avec un **E/C** équivalent au maximum à **0,55 %**.

### EXEMPLE 3

Même composition que l'exemple n° 2 en faisant varier la composition des sables pour obtenir un micro béton soit 850 kg de sable 0,075 à 4 mm et 800 kg de sable de 4 à 8 mm, toujours exempts de fillers

### EXEMPLE 4

Identique aux exemples 2 et 3
et afin d'augmenter les résistances mécaniques, la quantité de ciment peut être portée jusqu'à 600 Kg par m3
Le E/C de ce fait sera réduit environ 10 %.

## Revendications

1. Procédé pour la fabrication notamment in situ de mortier ou micro béton autonivelant, procédé au cours duquel on malaxe en présence d'eau, du ciment et de préférence d'autres ingrédients de base tel notamment des composés minéraux comme du sable et du gravier puis on conforme le mélange obtenu jusqu'à obtenir une rhéologie telle que ce dernier se coule comme un fluide
Caractérisé par le fait qu'on et en contact le susdit mélange avec une dispersion contenant au moins un Alccol à 90°, un hyposulfite de sodium, une iode et une quantité d'eau nécessaire à une bonne homogénéité
